# FASCICULE DE BREVET EUROPEEN

(11) **EP 0 930 200 B1**
(45) Date de publication et mention de la délivrance du brevet: **28.05.2003**
(21) Numéro de dépôt: 98124809.9
(22) Date de dépôt: 29.12.1998
(51) Int. Cl.: B60R 16/02

(54) **Dispositif d'alimentation temporisée et procédé de fontionnement d'un tel dispositif**
Verzögerte Stromversorgungsvorrichtung und Ihr Betriebsverfahren
Time delayed power supply device and operating method thereof

(30) Priorité: 13.01.1998 FR 9800268
(43) Date de publication de la demande: 21.07.1999
(73) Titulaire: Siemens VDO Automotive S.A.S., 31036 Toulouse Cédex 01 (FR)
(72) Inventeur: Jurek, Gilles, 31830 Plaisance Du Touche (FR)
(74) Mandataire: Berg, Peter, Dipl.-Ing.

(56) Documents cités:
- DE-A- 4 337 792
- FR-A- 2 455 768
- GB-A- 2 019 134
- US-A- 5 054 686

## Description

La présente invention est relative à un dispositif d'alimentation temporisée et à un procédé de fonctionnement d'un tel dispositif. Plus particulièrement, ce dispositif permet d'alimenter un accessoire embarqué dans un véhicule automobile lorsque le contact moteur est coupé.
Un dispositif selon le préambule de la revendication 1 est connu du document GB-A-2 019 134.

Un grand nombre d'accessoires présents dans les véhicules automobiles sont alimentés par la batterie (exemple : autoradio, climatisation, éclairage, etc...).

De manière à ne pas décharger inutilement cette batterie, de nombreux accessoires sont automatiquement mis hors tension lorsque le contact est coupé.

Cependant, il peut arriver qu'un conducteur coupe le contact de son véhicule et désire tout de même profiter de certains des accessoires à bord. Un tel cas peut, par exemple, se présenter lorsque la coupure du contact est temporaire (pour faire un plein de carburant) ou lorsque le conducteur travaille sur son véhicule à l'arrêt (par exemple dans son garage) et désire écouter son autoradio.

Jusqu'à présent, la solution la plus courante, pour permettre le fonctionnement de l'autoradio, était de remettre le contact, au moins dans la position dite « accessoire ». Cependant un oubli de la clef dans cette position pendant quelques heures peut provoquer une décharge de la batterie. Sans compter que le positionnement de la clef dans cette position entraîne une mise sous tension possible d'autres accessoires.

Certains accessoires présentent un mode de fonctionnement forcé dans lequel l'alimentation est maintenue pendant un temps déterminé lorsque le contact est coupé. Cette alimentation forcée temporisée est demandée, au cas par cas, par le conducteur. Ainsi, au bout d'un temps prédéterminé (éventuellement paramétrable), l'alimentation forcée est coupée. Ceci oblige le conducteur à venir remettre en marche son accessoire régulièrement.

Le but de la présente invention est d'autoriser l'alimentation temporisée, de certains accessoires, sans nécessiter de la part du conducteur des remises en fonctionnement régulières et sans avoir à se soucier de l'arrêt de cette alimentation temporisée.

A cet effet, la présente invention ,selon la revendication 1, concerne un dispositif d'alimentation temporisée pour un accessoire embarqué dans un véhicule automobile, le dit dispositif étant caractérisé en ce qu'il comporte un moyen de commande de la temporisation pendant laquelle le fonctionnement de l'accessoire est autorisé, ce moyen de commande étant adapté pour réinitialiser la dite temporisation lorsqu'une présence d'un individu est détectée dans le véhicule et que le contact moteur est coupé.

Grâce à de telles dispositions, le conducteur n'a pas à se soucier de l'alimentation de l'accessoire lorsque le contact est coupé. En effet, tant que la présence du conducteur est détectée (par exemple par la manipulation d'une porte ou d'une fenêtre, ou par activation des fonctions de l'autoradio...), le système électronique se charge de maintenir en fonctionnement l'accessoire désiré.

Avantageusement, la temporisation de l'alimentation est toujours réintialisée à partir de la dernière détection de présence.

Avantageusement, le verrouillage du véhicule entraîne la désactivation automatique de l'alimentation temporisée. Le conducteur n'a donc pas à se soucier de couper cette alimentation.

La présente invention concerne également un procédé de fonctionnement d'un tel dispositif.

D'autres objets, caractéristiques et avantages de la présente invention ressortiront de la description qui suit, à titre d'exemple non limitatif, et en référence aux dessins annexés dans lesquels :
- la figure 1 est une vue schématique montrant un dispositif selon la présente invention, et
- la figure 2 est une vue schématique illustrant le procédé de fonctionnement du dispositif selon l'invention.

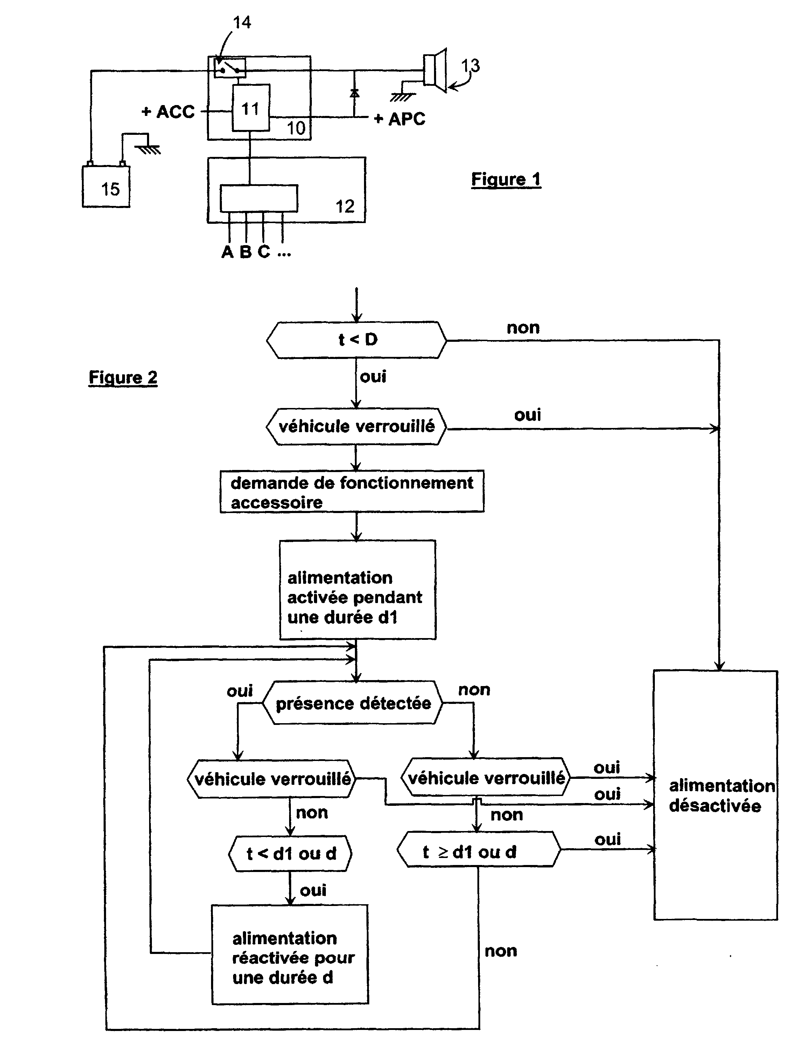

Selon la forme de réalisation représentée à la figure 1, le dispositif d'alimentation temporisée 10, selon l'invention, est adapté pour alimenter en courant un accessoire 13 (dans le cas représenté, un appareil autoradio) embarqué dans un véhicule automobile (non représenté). Ce véhicule comporte par ailleurs de manière classique une source de tension (batterie) 15.

Plus précisément, le dispositif selon la présente invention est adapté pour alimenter l'accessoire 13 lorsque le contact moteur est coupé.

Ainsi, dès la coupure du contact moteur, alors que l'alimentation des accessoires (+ACC) n'est normalement plus autorisée, si un accessoire est mis en fonctionnement, à l'instant t, c'est le dispositif d'alimentation temporisée 10 qui se charge de fournir l'énergie nécessaire au fonctionnement de cet accessoire 13 (voir figure 2). Cette mise en fonctionnement de l'accessoire n'est possible que pendant un laps de temps prédéterminé D après la coupure du moteur (au moment de la coupure du moteur t = 0), par exemple pendant une durée de une heure après la coupure du contact.

Le fonctionnement de l'accessoire alimenté par le dispositif d'alimentation temporisée est, quant à lui, autorisé pour une durée de fonctionnement d1.

Cette durée de fonctionnement d1 est dans le cas le plus simple égale à D - t, c'est à dire correspond au temps restant à courir jusqu'à la fin de la temporisation D. Ainsi, si la demande de mise en fonctionnement de l'accessoire est intervenue 35 mn après la coupure du moteur et que la temporisation D est de une heure, alors l'autorisation de fonctionnement est donnée pour les 25 mn restantes.

En variante, cette durée de fonctionnement d1 est fixée de manière arbitraire à d0 (par exemple une demi-heure) à partir du moment où la demande de mise en fonctionnement a été détectée, ceci quel que soit le temps qu'il reste à courir jusqu'à la fin de la temporisation D.

On notera que selon cette variante, il est nécessaire que le dispositif, selon l'invention, comporte un moyen de détection de l'instant où la demande de mise en fonctionnement est émise.

Si pendant cette durée de fonctionnement d1, une présence d'un individu est détectée dans le véhicule, alors la durée de fonctionnement est automatiquement réinitialisée d'une valeur d égale, par exemple, à une demi-heure. Ainsi, la durée de fonctionnement de l'accessoire est continuellement d'une demi-heure suivant la dernière détection de présence (dans l'exemple ci-dessus).

Le dispositif d'alimentation temporisée 10 est informé de la présence d'un individu dans le véhicule par l'unité centrale de gestion des fonctions habitacles 12. En effet, tout actionnement d'un accessoire, comme l'activation d'un plafonnier A, l'activation de la climatisation B, l'activation d'un ouvrant C, l'activation des clignotants etc... est considéré comme significatif de la présence d'un individu dans l'habitacle et provoque la réinitialisation de la temporisation de fonctionnement d de l'accessoire.

Si au bout du temps de fonctionnement d1 ou d, aucune détection de présence n'a été recensée, alors l'alimentation temporisée est désactivée. De même, si le véhicule est verrouillé, alors l'alimentation temporisée 10 est immédiatement désactivée.

Le procédé de fonctionnement du dispositif selon l'invention est le suivant (figure 2) : lorsque la mise en fonctionnement d'un accessoire est demandée à l'instant t, alors que le moteur est coupé,
- on vérifie que le contact moteur a été coupé depuis un temps t inférieur à une durée prédéterminée D (par exemple une heure) et si c'est le cas
- on vérifie que le véhicule n'est pas verrouillé, et si c'est le cas,
- on autorise l'alimentation de l'accessoire 13 pendant une durée de fonctionnement d1 et, pendant tout le temps de cette autorisation de fonctionnement,
   - on vérifie si une présence est détectée à proximité du véhicule. Si une telle présence est détectée, on réinitialise pour une durée prédéterminée d, la durée de fonctionnement autorisée, et
   - si aucune présence n'a été détectée à la fin de la durée de fonctionnement autorisée, ou si le véhicule est verrouillé, l'alimentation temporisée est désactivée,
- dans tous les autres cas, l'alimentation temporisée est désactivée.

Le dispositif d'alimentation temporisée 10 (figure 1) mettant en oeuvre un tel procédé comporte un moyen de commande de la temporisation 11 recevant d'une unité centrale 12 de gestion des fonctions habitacles des informations (A, B, C, ...) concernant la détection d'une présence à proximité du véhicule. Le dispositif d'alimentation temporisée comporte également un relais 14 commandé par le moyen de commande 11 et autorisant ou non l'alimentation de l'accessoire 13. La source d'énergie permanente destinée à alimenter l'accessoire lorsque le contact moteur est coupé est la batterie 15 du véhicule.

Le dispositif d'alimentation temporisée, selon l'invention, reçoit par ailleurs une information concernant l'état de fonctionnement du moteur +APC (alimentation après contact). Cette information indique au dispositif d'alimentation temporisée que le contact moteur est activé et qu'il n'est donc plus nécessaire d'alimenter directement par la batterie les accessoires en fonctionnement. Cette information +APC permet de désactiver le dispositif selon l'invention lorsque le moteur est en fonctionnement.

On notera que le dispositif d'alimentation temporisée selon l'invention peut être intégré à chaque accessoire 13 susceptible d'être utilisé après la coupure du contact moteur, ou encore être intégré à l'unité centrale 12 de gestion des fonctions habitacles.

On notera également que le déverrouillage du véhicule (avant mise du contact moteur) provoque la mise en fonctionnement du dispositif d'alimentation temporisée 10. Ainsi, un accessoire peut être mis en fonctionnement sans activer le contacteur de colonne de direction avec la clef.

On notera qu'au-delà de la période de temps prédéterminée D (une heure par exemple) après coupure du contact moteur, le dispositif selon l'invention n'est plus activable par simple détection de présence. En fait, le dispositif d'alimentation temporisée n'est activable que pendant une période de temps déterminée D, étant entendu que si une activation à été effectuée pendant cette période de temps D, cette activation est prolongeable automatiquement par détection de présence.

Il est à noter que les moyens de détection de la présence d'un individu dans un véhicule peuvent être constitués par des capteurs à ultra son (ou à infra rouge) associés à un dispositif d'alarme classique. Bien entendu dans ce cas, le dispositif d'alarme est passif et n'est pas en fonctionnement puisque le véhicule n'est pas verrouillé.

La présente invention a été illustrée pour l'utilisation d'un autoradio après coupure du contact moteur, mais bien entendu n'est pas limitée à ce type d'accessoire. Le dispositif d'alimentation temporisée peut également permettre l'alimentation temporisée de la climatisation, de l'éclairage, etc... après coupure du contact moteur, ceci sans sortir du cadre de la présente invention.

## Revendications

1. Dispositif d'alimentation temporisée pour un accessoire (13) embarqué dans un véhicule automobile, le dit dispositif (10) comportant un moyen de commande (11) de la temporisation (d1, d) pendant laquelle le fonctionnement de l'accessoire est autorisé, le dit dispositif étant **caractérisé en ce que** ce moyen de commande est adapté pour réinitialiser la dite temporisation lorsqu'une présence (A, B, C,...) d'un individu est détectée dans le véhicule et que le contact moteur est coupé.

2. Dispositif selon la revendication 1, **caractérisé en ce que** le moyen de commande de la temporisation est activable pendant une durée déterminée (D).

3. Dispositif selon la revendication 1 ou 2, **caractérisé en ce que** la détection d'une présence d'un individu à l'intérieur d'un véhicule tient compte notamment de l'actionnement d'ouvrants et / ou de clignotants et / ou de la climatisation et /ou de l'éclairage et /ou de l'autoradio.

4. Dispositif selon l'une quelconque des revendications précédentes, **caractérisé en ce que** l'alimentation temporisée (10) est désactivée lors du verrouillage du véhicule.

5. Dispositif selon l'une quelconque des revendications 1 à 4, **caractérisé en ce que** le déverrouillage du véhicule provoque la mise en fonctionnement de l'alimentation temporisée (10).

6. Dispositif selon l'une quelconque des revendications 1 à 5, **caractérisé en ce qu'**il fait partie intégrante d'une unité centrale (12) de gestion des fonctions habitacles.

7. Dispositif selon l'une quelconque des revendications 1 à 5, **caractérisé en ce qu'**il fait partie intégrante d'un accessoire (13) embarqué dans le véhicule.

8. Procédé de fonctionnement d'un dispositif selon l'une quelconque des revendications 1 à 7, **caractérisé en ce qu'**il consiste, lorsque le contact est coupé et que l'alimentation d'un accessoire (13) est demandée à l'instant t, à :
- vérifier que le contact a été coupé depuis un temps inférieur à une durée prédéterminée (D), et dans ce cas
- vérifier que le véhicule n'est pas verrouillé, et dans ce cas,
- autoriser l'alimentation temporisée de l'accessoire (13) pour une période de temps prédéterminée (d1) et pendant toute la durée de cette autorisation de fonctionnement,
- vérifier si une présence est détectée dans le véhicule, et dans ce cas, réinitialiser la durée (d) de fonctionnement autorisée et,
- désactiver l'alimentation temporisée (10), si aucune présence (A, B, C ...) n'a été détectée à la fin de la durée de fonctionnement autorisée, ou si le véhicule est verrouillé.

9. Procédé selon la revendication 8, **caractérisé en ce que** la durée (d) de l'alimentation temporisée (10) est réinitialisée, à chaque fois qu'une nouvelle présence (A, B, C, ...) est détectée.

10. Procédé selon la revendication 8 ou 9, **caractérisé en ce que** l'alimentation temporisée (10) est désactivée dès que le véhicule est verrouillé.

## Patentansprüche

1. Zeitvorgabengesteuerte Stromversorgungsvorrichtung für ein Zusatzgerät (13) in einem Kraftfahrzeug, wobei die besagte Vorrichtung (10) ein Steuermittel (11) für die Zeitvorgabe (d1, d) aufweist, während der der Betrieb des Zusatzgerätes ermöglicht wird, wobei die besagte Vorrichtung **dadurch gekennzeichnet ist, dass** dieses Steuermittel in der Lage ist, die Zeitvorgabe erneut zu initiieren, wenn die Anwesenheit (A,B,C,...) eines Individuums im Fahrzeug detektiert wird und der Motorkontakt unterbrochen ist.

2. Vorrichtung nach Anspruch 1, **dadurch gekennzeichnet, dass** das Steuermittel für die Zeitvorgabe während einer vorgegebenen Dauer (D) aktivierbar ist.

3. Vorrichtung nach Anspruch 1 oder 2, **dadurch gekennzeichnet, dass** das Detektieren der Anwesenheit eines Individuums im Inneren eines Fahrzeuges insbesondere die Betätigung von Türen und/oder Blinkern und/oder der Klimaanlage und/oder der Beleuchtung und/oder des Autoradios berücksichtigt.

4. Vorrichtung nach einem der vorhergehenden Ansprüche, **dadurch gekennzeichnet, dass** die zeitvorgabengesteuerte Stromversorgung (10) beim Verriegeln des Fahrzeugs deaktiviert wird.

5. Vorrichtung nach einem der Ansprüche 1 bis 4, **dadurch gekennzeichnet, dass** das Verriegeln des Fahrzeugs die Inbetriebnahme der zeitvorgabengesteuerten Stromversorgung (10) bewirkt.

6. Vorrichtung nach einem der Ansprüche 1 bis 5, **dadurch gekennzeichnet, dass** sie einen integralen Bestandteil einer zentralen Einheit (12) zur Steuerung von Kabinenfunktionen bildet.

7. Vorrichtung nach einem der Ansprüche 1 bis 5, **dadurch gekennzeichnet, dass** sie einen integralen Bestandteil eines Zusatzgerätes (13) im Fahrzeug bildet.

8. Verfahren zum Betreiben einer Vorrichtung nach einem der Ansprüche 1 bis 7, **dadurch gekennzeichnet, dass** es, wenn der Kontakt unterbrochen ist und die Stromversorgung eines Zusatzgerätes (13) im Zeitpunkt (t) angefordert wird, darin besteht:
- zu verifizieren, dass der Kontakt während einer Dauer unterbrochen wurde, die kleiner als eine vorgegebene Dauer (D) ist, und in diesem Fall
- zu verifizieren, dass das Fahrzeug nicht verriegelt ist, und in diesem Fall
- die zeitvorgabengesteuerte Stromversorgung des Zusatzgerätes für eine vorgegebene Zeitdauer (dl) freizugeben und während der gesamten Dauer dieser Betriebsfreigabe
- zu verifizieren, ob eine Anwesenheit im Fahrzeug detektiert wurde, und in diesem Fall die Dauer (d) des freigegebenen Betriebs erneut zu initiieren, und
- die zeitvorgabengesteuerte Stromversorgung (10) zu deaktivieren, wenn keine Anwesenheit (A,B,C,...) am Ende der Dauer des freigegebenen Betriebs detektiert wurde oder wenn das Fahrzeug verriegelt ist.

9. Verfahren nach Anspruch 8, **dadurch gekennzeichnet, dass** die Dauer (d) der zeitvorgabengesteuerten Stromversorgung (10) jedes Mal neu initiiert wird, wenn eine neue Anwesenheit (A,B,C,...) detektiert wurde.

10. Verfahren nach Anspruch 8 oder 9, **dadurch gekennzeichnet, dass** die zeitvorgabengesteuerte Stromversorgung (10) deaktiviert wird, sobald das Fahrzeug verriegelt wird.

## Claims

1. Timed power supply device for an accessory (13) in a motor vehicle, said device (10) having a means of control (11) of the time delay (d1, d) during which the operation of the accessory is authorised, said device being **characterised in that** this means of control is designed to reset said time delay if a presence (A, B, C, etc.) of a person is detected in the vehicle and the ignition is off.

2. Device according to Claim 1, **characterised in that** the means of control of the time delay may be activated for a set period of time (D).

3. Device according to Claims 1 or 2, **characterised in that** the detection of a presence of a person inside the vehicle relies in particular on the use of openable parts and/or indicators and/or the air-conditioning and/or the lighting and/or the car radio.

4. Device according to any one of above claims, **characterised in that** the timed power supply (10) is deactivated when the vehicle is locked.

5. Device according to any one of Claims 1 to 4, **characterised in that** unlocking the vehicle turns on the timed power supply (10).

6. Device according to any one of Claims 1 to 5, **characterised in that** it is in integral part of the central management unit (12) of the cockpit functions.

7. Device according to any one of Claims 1 to 5, **characterised in that** it is in integral part of an accessory (13) in the vehicle.

8. Operating method of a device according to any one of Claims 1 to 7,
**characterised in that**, when the ignition is off and power to an accessory (13) is requested at instant t, it consists of:
- checking that the power has been off for a period of time less than a predetermined period of time (D), and if so,
- checking that the vehicle is not locked, and if not,
- authorising the timed power supply to the accessory (13) for a predetermined period of time (d1) and for the duration of that authorisation for operation,
- checking whether a presence has been detected in the vehicle and, if so, resetting the authorised period (d) of operation and,
- deactivating the timed power supply (10), if no presence (A, B, C, etc.) is detected at the end of the authorised period of operation, or if the vehicle is locked.

9. Method according to Claim 8, **characterised in that** the period (d) of timed power supply (10) is reset each time a new presence (A, B, C, etc.) is detected.

10. Method according to Claim 8 or 9, **characterised in that** the timed power supply (10) is deactivated when the vehicle is locked.
